# EUROPEAN PATENT APPLICATION

(11) **EP 4 371 816 A1**
(43) Date of publication of application: **22.05.2024**
(21) Application number: 23210030.5
(22) Date of filing: 15.11.2023
(51) Int. Cl.: B60N 2/30, B64D 11/06, B60N 2/02

(54) **SYSTEM INCLUDING SEAT PAN ASSEMBLY**

(30) Priority: 16.11.2022 IN 202211065766; 17.07.2023 US 202318222848
(71) Applicant: B/E Aerospace, Inc., Winston-Salem, NC 27105 (US)
(72) Inventor: DOWTY, Mark B., Rural Hall, 27045 (US); LEE, Eric W., Charlotte, NC, 28269 (US); RAO, Sreekanth, 560061 Bangalore (IN); ACHARYA, Pradeep, 560072 Bangalore (IN)
(74) Representative: Dehns

(57) **Abstract**

A system includes a seat pan assembly. The seat pan assembly may include a fixed link (112-1) having a fore end and an aft end. The seat pan assembly may further include an aft driver link (114-1) having an aft driver link fore end and an aft driver link aft end, wherein the aft driver link fore end is pivotably coupled to the aft end of the fixed link. The seat pan assembly may further include a fore driven link (116-1) having a fore driven link fore end and a fore driven link aft end, wherein the fore driven link aft end is pivotably coupled to the fore end of the fixed link.

## Description

### CROSS-REFERENCE TO RELATED APPLICATIONS

The present application is related to and claims priority from: Indian Application Serial Number 202211065766, titled SYSTEM INCLUDING SEAT PAN ASSEMBLY, filed November 16, 2022, and US application 18/222,848.

### BACKGROUND

Type III overwing exit egress requirements drive the spacing of seats in aircraft. The most constraining requirements surround the egress path toward the exit.

### SUMMARY

In one aspect, there is provided a system. The system includes a seat pan assembly. The seat pan assembly may include a fixed link having a fore end and an aft end. The seat pan assembly may further include an aft driver link having an aft driver link fore end and an aft driver link aft end, wherein the aft driver link fore end is pivotably coupled to the aft end of the fixed link. The seat pan assembly may further include a fore driven link having a fore driven link fore end and a fore driven link aft end, wherein the fore driven link aft end is pivotably coupled to the fore end of the fixed link. When a downward component force acts upon the aft driver link, the aft driver link aft end is configured to rotate about the aft end of the fixed link and cause the fore driven link fore end to rotate about the fore end of the fixed link such that the fore driven link fore end is configured to move at least partially in an upward direction and forward direction.

In a further aspect, a system includes a seat pan assembly. The seat pan assembly may include an aft driver link having an aft driver link fore end and an aft driver link aft end. The seat pan assembly may include a fore driven link having a fore driven link fore end and a fore driven link aft end, wherein the fore driven link aft end is pivotably coupled to the aft driver link fore end. When a downward component force acts upon the aft driver link, the aft driver link aft end is configured to rotate about the fore driven link aft end and cause the fore driven link fore end to rotate about the aft driver link fore end such that the fore driven link fore end is configured to move at least partially in an upward direction and forward direction.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a side view of a currently implemented system including an aircraft including an emergency egress path positioned between two rows of standard aircraft seats having standard aircraft seat base frames.
FIG. 2 is a side view of an exemplary embodiment of the system including the aircraft including at least one emergency egress path positioned between two rows of aircraft seats (e.g., standard aircraft seats having standard aircraft seat base frames and aircraft seats having compact aircraft seat base frames and seat pan assemblies) according to the inventive concepts disclosed herein.
FIG. 3 is a side view of an exemplary embodiment of the system of FIG. 2 according to the inventive concepts disclosed herein.
FIGS. 4A-4B are perspective views of an exemplary embodiment of the system including the aircraft including the aircraft seat having compact aircraft seat base frames and the seat pan assembly of FIG. 2 in a stowed state (as shown in FIG. 4A) and a deployed state (as shown in FIG. 4B) according to the inventive concepts disclosed herein.
FIGS. 5A, 5B, 5C, and 5D are side views of an exemplary embodiment of the seat pan assembly of FIGS. 4A-4B according to the inventive concepts disclosed herein.
FIGS. 6A, 6B, 6C, 6D, and 6E are perspective views of an exemplary embodiment of the seat pan assembly of FIGS. 4A-4B according to the inventive concepts disclosed herein.
FIGS. 7A, 7B, and 7C are views of an exemplary embodiment of the seat pan assembly of FIGS. 4A-4B according to the inventive concepts disclosed herein.
FIGS. 8A, 8B, 8C, and 8D are side views of an exemplary embodiment of the seat pan assembly of FIGS. 4A-4B according to the inventive concepts disclosed herein.
FIGS. 9A and 9B are perspective views of an exemplary embodiment of the seat pan assembly of FIGS. 4A-4B according to the inventive concepts disclosed herein.
FIGS. 10A and 10B are perspective views of an exemplary embodiment of a portion of the seat of FIG. 2 including the seat pan assembly of FIGS. 4A-4B according to the inventive concepts disclosed herein.
FIG. 11 is a perspective view of an exemplary embodiment of the seat pan assembly of FIGS. 4A-4B according to the inventive concepts disclosed herein.
FIG. 12 is a side view of an exemplary embodiment of the seat pan assembly of FIGS. 4A-4B according to the inventive concepts disclosed herein.
FIG. 13 is a side view of an exemplary alternative embodiment of a portion of the seat of FIG. 2 including a seat pan assembly according to the inventive concepts disclosed herein.
FIG. 14 is a perspective side view of second exemplary alternative embodiment of a portion of the seat of FIG. 2 including a seat pan assembly according to the inventive concepts disclosed herein.
FIG. 15 is a side view of the exemplary alternative embodiment of the seat pan assembly of FIG. 13 according to the inventive concepts disclosed herein.
FIG. 16 is side view of an exemplary embodiment of a portion of the seat of FIG. 2 including the seat pan assembly of FIGS. 4A-4B according to the inventive concepts disclosed herein.
FIGS. 17A-17B are side views of an exemplary embodiment of the seat pan assembly of FIG. 2 according to the inventive concepts disclosed herein.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to a system including a seat pan assembly.

Some embodiments offer a solution to maintain the overwing exit egress path when the aircraft seat is not occupied, such as during an emergency egress.

In some embodiments, a seat pan assembly may move between an occupied state to a more compressed unoccupied state so as to open a greater emergency egress path during an evacuation. In some embodiments, the movement of the seat pan assembly may be damped and/or delayed to prevent movement of the seat pan assembly during a momentary seating position shift by a passenger.

Some embodiments may provide an increased density (e.g., about 2-3" for a single overwing exit (OWE) and about 4-6" for dual OWE). The increased density may translate to increased profitability for the airline.

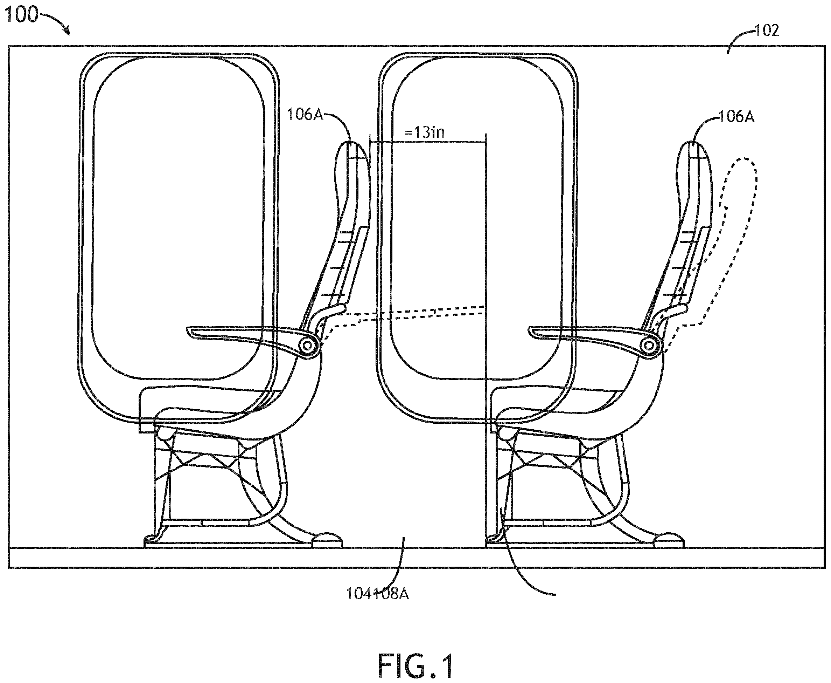

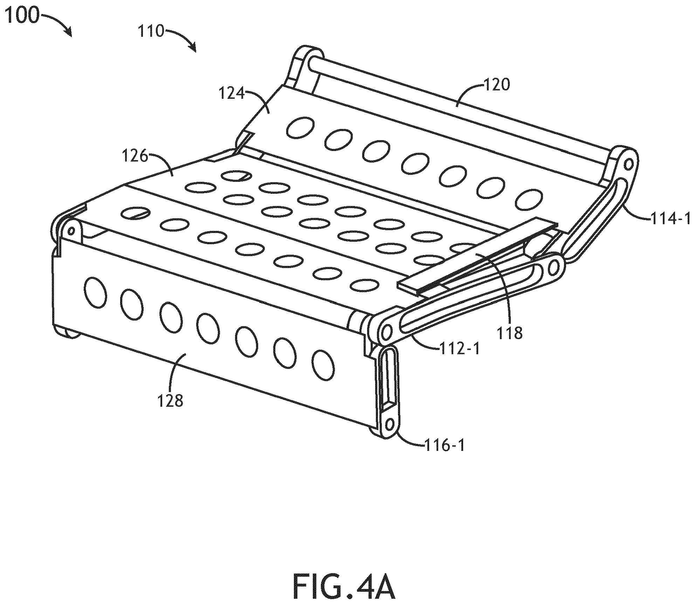

Referring generally to FIGS. 1-3, side views of exemplary embodiments of a system 100 including a vehicle (e.g., aircraft 102, watercraft, automobile, train, etc.) including at least one emergency egress path 104 (e.g., at least one OWE emergency egress path) positioned between two rows of aircraft seats (e.g., standard aircraft seats 106A having standard aircraft seat base frames 108A and/or aircraft seats 106 having compact aircraft seat base frames 108 and seat pan assemblies 110, 110A (such as shown in FIGS. 4A-16)) depicted according to the inventive concepts.

Referring now to FIG. 1, a side view of a currently implemented system 100 including an aircraft 102 including an emergency egress path 104 positioned between two rows of standard aircraft seats 106A having standard aircraft seat base frames 108A is depicted. FIG. 1 depicts a typical situation on a Type III overwing aircraft. Standard aircraft seats 106A are installed at minimum distance for density but large enough to allow regulatory minimum egress path 104 to the exit. A projected distance between the front most portion of the seat 106A at the exit and the aft most point of the seat forward of the exit must be maintained to ensure egress to the emergency exit.

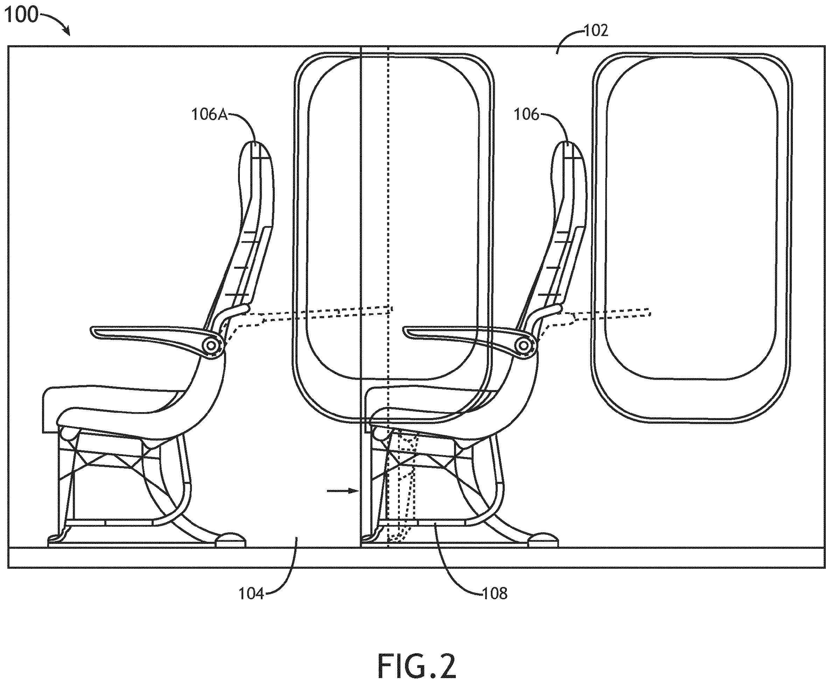

Referring now to FIGS. 2-3, in some embodiments, it is desired to place seats 106, 106A closer together while maintaining the required emergency egress path 104. Some embodiments may include an aircraft seat(s) 106 having a seat pan assembly 110 (such as shown in FIGS. 4A-16)) and a compact aircraft seat base frame 108, which is desired to create a supported seat surface when an occupant sits on the seat 106 while presenting with a reduced surface when the seat 106 is not occupied.

Current regulations restrict any seat bottom portion from being above a bottom of an adjacent aircraft window. Additionally, current standard aircraft seat structures prevent downward motion of the standard aircraft seat cushion and support system.

As shown in FIG. 2, a side view of an exemplary embodiment of a system 100 including the aircraft 102 including at least one emergency egress path 104 (e.g., at least one OWE emergency egress path) positioned between two rows of aircraft seats (e.g., standard aircraft seats 106A having standard aircraft seat base frames 108A and aircraft seats 106 having compact aircraft seat base frames 108 and seat pan assemblies 110, 110A (such as shown in FIGS. 4A-16)) depicted according to the inventive concepts.

Some embodiments include a new compressed and/or compact seat frame 108, which may be optimized for lower-weight, tight pitch seat assemblies which may be used for ultra high-density configurations suitable for use with some embodiments. In some embodiments, the aircraft seat 106 may have higher interface loads as a result of a lower leg-pitch (e.g., front stud to aft fitting pivot). In some embodiments, a reinforced floor structure in the overwing exit area may be used to allow for the higher loads in some applications.

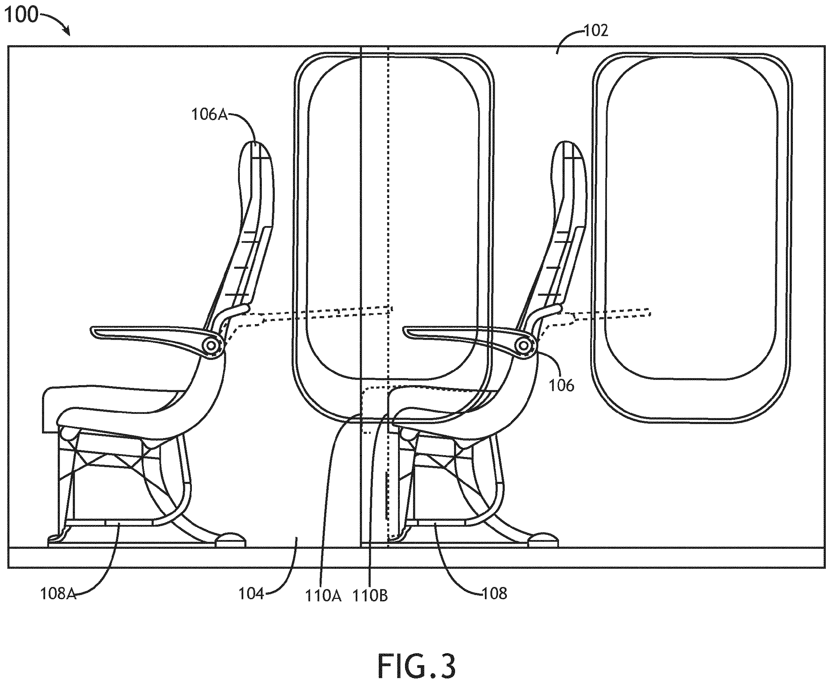

As shown in FIG. 3, a side view of an exemplary embodiment of a system 100 including the aircraft 102 including at least one emergency egress path 104 (e.g., at least one OWE emergency egress path) positioned between two rows of aircraft seats (e.g., standard aircraft seats 106A having standard aircraft seat base frames 108A and aircraft seats 106 having compact aircraft seat base frames 108 and seat pan assemblies 110, 110A (such as shown in FIGS. 4A-16)) depicted according to the inventive concepts. As shown in FIG. 3, merely shortening the seat pan length, with no means to provide a standard seat length, would greatly reduce passenger comfort. FIG. 3 shows exemplary lengths of the aircraft seat 106's seat bottom (having the seat pan assembly 110A of FIGS. 4A-16) in a deployed state 110A and a stowed state 110B.

As shown with respect to FIGS. 2-17B, some embodiments may include a seat pan assembly that can extend for comfort when occupied but may be reduced in length when unoccupied, such as during an emergency evacuation.

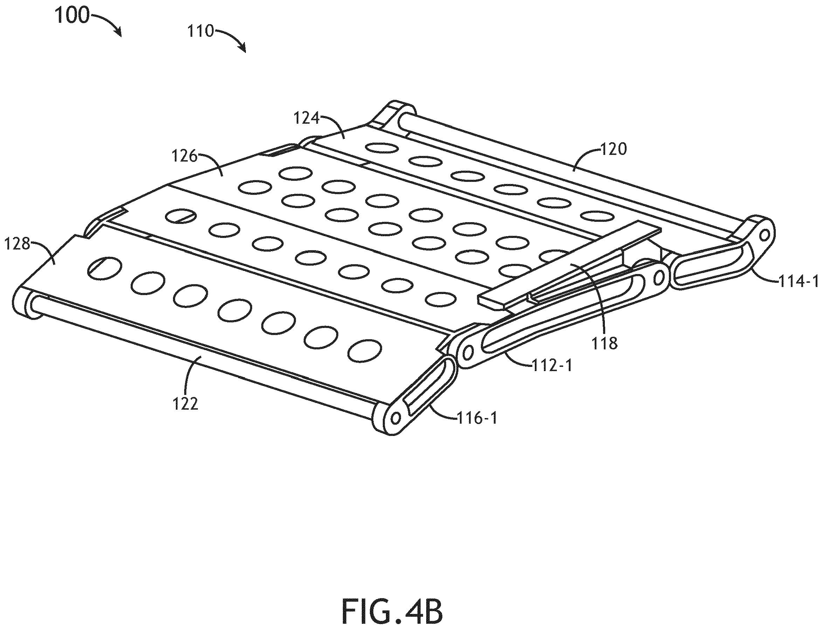

Referring now to FIGS. 4A-4B, perspective views of an exemplary embodiment of the system 100 including the aircraft 102 including the aircraft seat 106 having compact aircraft seat base frames 108 and the seat pan assembly 110 in a stowed state (as shown in FIG. 4A) and a deployed state (as shown in FIG. 4B) are depicted according to the inventive concepts.

The seat pan assembly 110 may include a fixed link 112-1 having a fore end and an aft end. The seat pan assembly 110 may include an aft driver link 114-1 having an aft driver link fore end and an aft driver link aft end, and the aft driver link fore end may be pivotably coupled to the aft end of the fixed link 112-1. In some embodiments, the aft driver link aft end may be angled upward as compared to the rest of the aft driver link 114-1. The seat pan assembly 110 may include a fore driven link 116-1 having a fore driven link fore end and a fore driven link aft end, and the fore driven link aft end may be pivotably coupled to the fore end of the fixed link 112-1.

When a downward component force acts upon the aft driver link 114-1, the aft driver link aft end may be configured to rotate about the aft end of the fixed link 112-1 and cause the fore driven link fore end to rotate about the fore end of the fixed link 112-1 such that the fore driven link fore end is configured to move at least partially in an upward direction and forward direction, such as to a deployed seat pan state.

When the downward component force ceases acting upon the aft driver link 114-1, the aft driver link aft end may be configured to rotate about the aft end of the fixed link 112-1 and cause the fore driven link fore end to rotate about the fore end of the fixed link 112-1 such that the fore driven link fore end is configured to move at least partially in a downward direction and aft direction, such as to a stowed state.

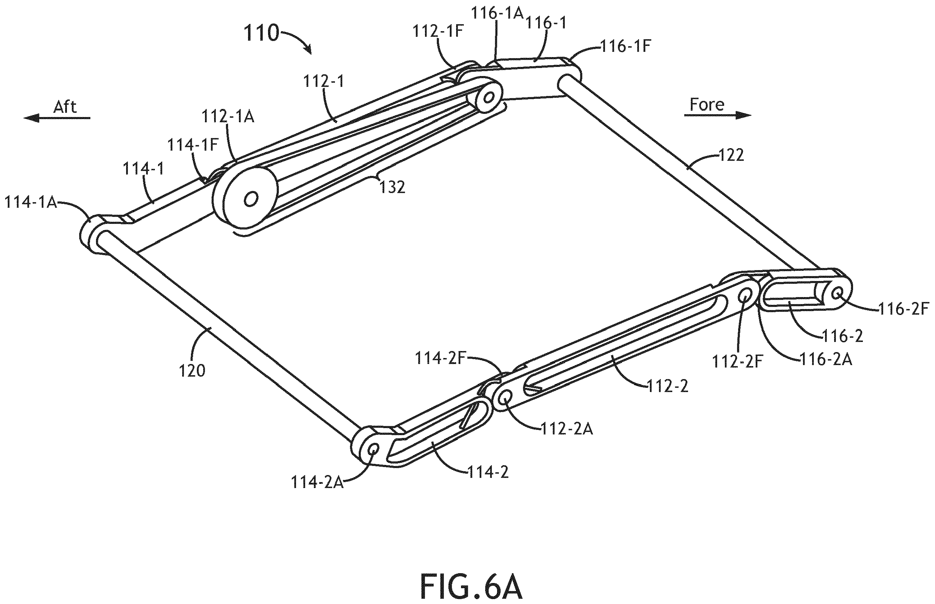

The seat pan assembly 110 may further include a second fixed link (such as shown better in FIG. 6A) having a second fore end and a second aft end. The seat pan assembly 110 may include a second aft driver link (such as shown better in FIG. 6A) having a second aft driver link fore end and a second aft driver link aft end, and the second aft driver link fore end may be pivotably coupled to the second aft end of the second fixed link. The seat pan assembly 110 may include a second fore driven link (such as shown better in FIG. 6A) having a second fore driven link fore end and a second fore driven link aft end, and the second fore driven link aft end may be pivotably coupled to the second fore end of the second fixed link. The seat pan assembly 110 may include an aft crossbar 120 connected between the second aft driver link aft end and the aft driver link aft end. The seat pan assembly 110 may include a fore crossbar 122 connected between the second fore driven link fore end and the fore driven link fore end.

When the downward component force acts upon the second aft driver link, the second aft driver link aft end may be configured to rotate about the second aft end of the second fixed link and cause the second fore driven link fore end to rotate about the second fore end of the second fixed link such that the second fore driven link fore end is configured to move at least partially in an upward direction and forward direction, such as to the deployed state.

The seat pan assembly 110 may further include a fore seat pan section 128 connected between the second fore driven link and the fore driven link 116-1. The seat pan assembly 110 may include a seat pan section 126 connected between the second fixed link and the fixed link 112-1. The seat pan assembly 110 may include an aft seat pan section 124 connected between the second aft driver link and the aft driver link 114-1. For example, each of the fore seat pan section 128, the seat pan section 126, and the aft seat pan section 124 may be metal flex plan sections, which may provide sufficient support to a seated occupant and aid in the transfer of force needed to move seat pan assembly 110 from a deployed state to a stowed state, or vice versa. For example, each of the fore seat pan section 128, the seat pan section 126, and the aft seat pan section 124 may be riveted onto one of the links on each side so as to make the seat pan sections integral with each section of the seat pan assembly 110.

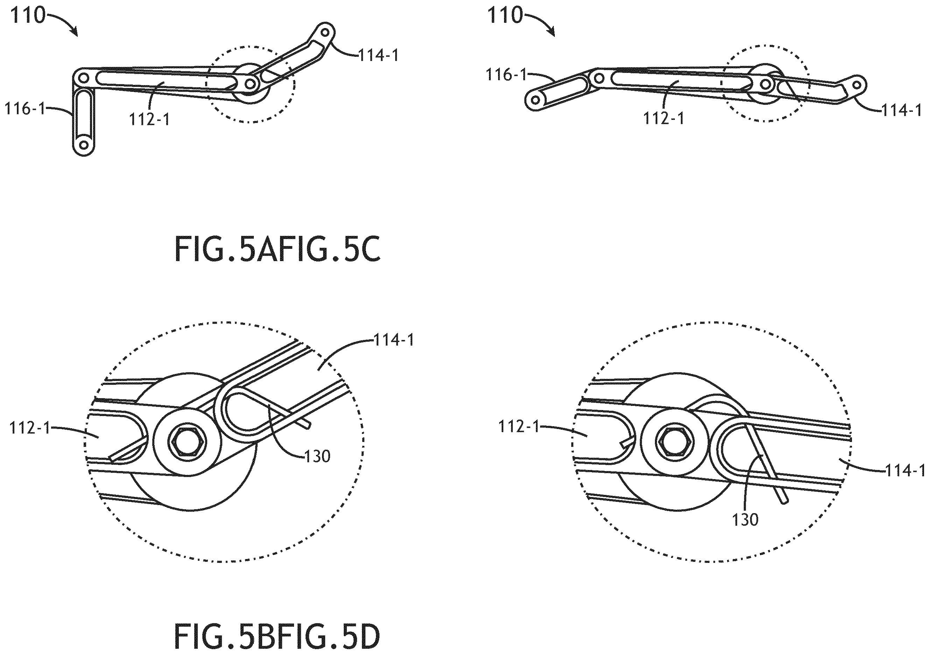

Referring now to FIGS. 5A-5D, side views of an exemplary embodiment of the seat pan assembly 110 in a stowed state (as shown in FIGS. 5A and 5B) and a deployed state (as shown in FIGS. 5C and 5D) depicted according to the inventive concepts.

As shown in FIGS. 5A-5D, a wire spring 130 may be coupled between the aft driver link 114-1 and the fixed link 112-1. For example, the wire spring 130 may be guided through holes in the aft driver link 114-1 and the fixed link 112-1 to provide a default stowed state to the seat pan assembly 110 when an occupant is not sitting on the seat 106. For example, through holes in the links 114-1, 112-1 may prevent the wire spring 130 from moving laterally. The wire spring 130 may be deformable (e.g., deflectable) in response to an occupant sitting in the seat 106. The wire spring 130 may provide the necessary force to position the seat pan assembly 110 in the stowed state when an occupant is not sitting in the seat 106.

Referring now to FIGS. 6A-6E, various views of an exemplary embodiment of the seat pan assembly 110 are depicted according to the inventive concepts.

As shown in FIG. 6A-6E, the seat pan assembly 110 may include a fixed link 112-1 having a fore end 112-1F and an aft end 112-1A. The seat pan assembly 110 may include an aft driver link 114-1 having an aft driver link fore end 114-1F and an aft driver link aft end 114-1A, and the aft driver link fore end 114-1F may be pivotably coupled to the aft end 112-1A of the fixed link 112-1. In some embodiments, the aft driver link aft end 114-1A may be angled upward as compared to the rest of the aft driver link 114-1. The seat pan assembly 110 may include a fore driven link 116-1 having a fore driven link fore end 116-1F and a fore driven link aft end 116-1A, and the fore driven link aft end 116-1A may be pivotably coupled to the fore end 112-1F of the fixed link 112-1.

The seat pan assembly 110 may further include a second fixed link 112-2 having a second fore end 112-2F and a second aft end 112-2A. The seat pan assembly 110 may include a second aft driver link 114-2 having a second aft driver link fore end 114-2F and a second aft driver link aft end 114-2A, and the second aft driver link fore end 114-2F may be pivotably coupled to the second aft end 112-2A of the second fixed link 112-2. The seat pan assembly 110 may include a second fore driven link 116-2 having a second fore driven link fore end 116-2F and a second fore driven link aft end 116-2A, and the second fore driven link aft end 116-2A may be pivotably coupled to the second fore end 112-2F of the second fixed link 112-2. The seat pan assembly 110 may include an aft crossbar 120 connected between the second aft driver link aft end 114-2A and the aft driver link aft end 114-1A. The seat pan assembly 110 may include a fore crossbar 122 connected between the second fore driven link fore end 116-2F and the fore driven link fore end 116-1F.

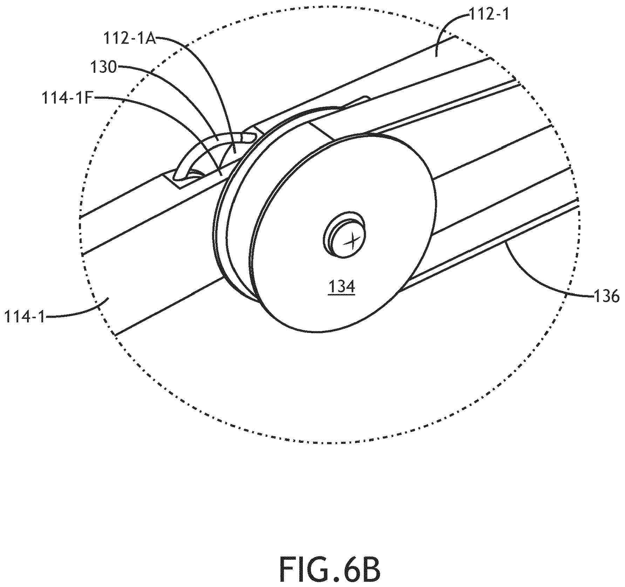

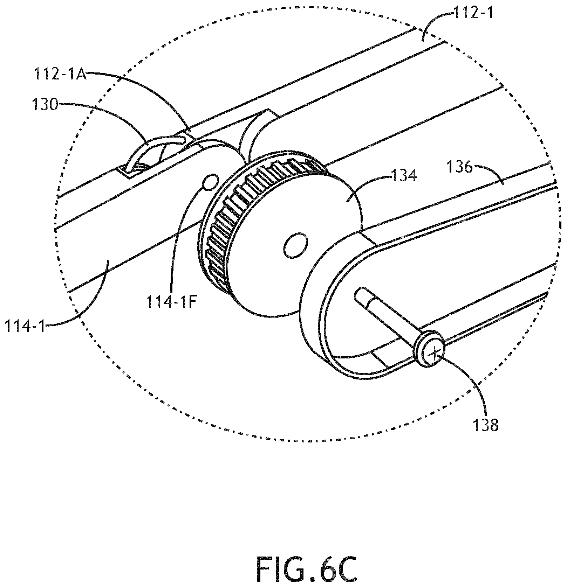

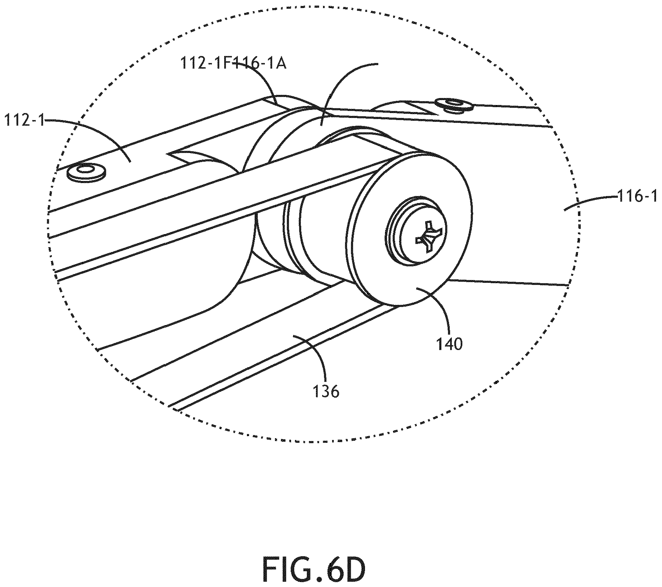

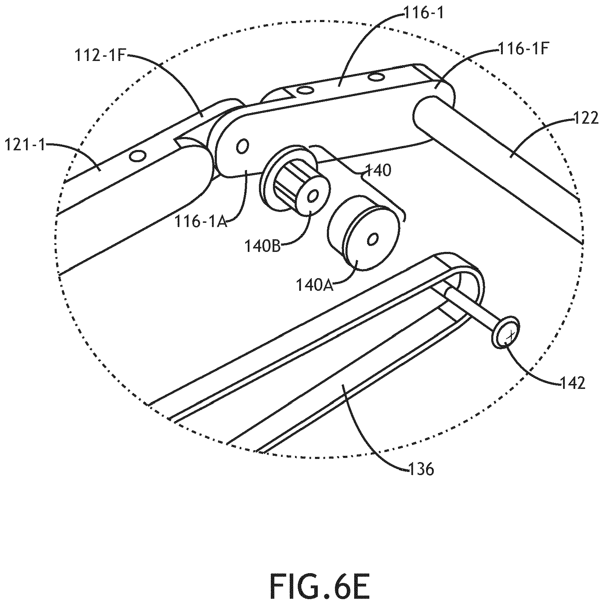

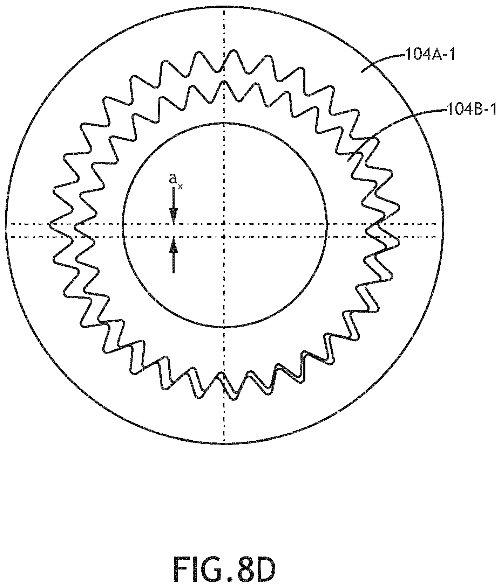

The seat pan assembly 110 may further include a driver train 132 configured to transmit motion from the aft driver link 114-1 to the fore driven link 116-1. The driver train 132 may include a driver timing pulley 134 (as shown in FIGS. 6B and 6C), a driven pulley 140 (e.g., a driven timing pulley) (as shown in FIGS. 6D and 6E), and a timing belt 136 (as shown in FIGS. 6A-6E) installed around the driver timing pulley 134 and the driven pulley 140. The timing belt 136 may be used to connect the pulleys 134, 140 and transmit motion. The timing belt 136 may ensure no transmission losses occur between the driver timing pulley 134 and the driven pulley 140. The motion amplification may be achieved because of the smaller angle of rotation by choosing a suitable pulley diameter ratio between the driver timing pulley 134 and the driven pulley 140. For example, the driver timing pulley 134 may have a greater diameter than the driven pulley 140. As shown in 6C, a first fastener 138 may extend through the driver timing pulley 134, the aft driver link fore end 114-1F, and the aft end 112-1A of the fixed link 112. As shown in 6E, a second fastener 142 may extend through the driven pulley 140, the fore driven link aft end 116-1A, and the fore end 112-1F of the fixed link 112. In some embodiments, the driven pulley 140 may include multiple components (e.g., 140A, 140B). For example, the driven pulley 140 may have a staggered gear including staggered gear components 140A, 140B such that an initial amount (e.g., an initial 5-8 degrees) of motion by the aft driver link 114-1 produces no motion in the fore driven link 116-1. For example, the driven pulley 140 may have an annular gear including annular gear components 140A-1, 1408-1 (such as shown in FIG. 8D) such that an initial amount (e.g., an initial 5-8 degrees) of motion by the aft driver link 114-1 produces no motion in the fore driven link 116-1. In some embodiments, the driver train 132 further includes the wire spring 130 coupled between the aft driver link 114-1 and the fixed link 112.

In some embodiments, the seat pan assembly 110 may further include a second driver train configured to transmit motion from the second aft driver link 114-2 to the fore driven link 116-2. The second driver train may function similarly to and have components similar to the driver train 132.

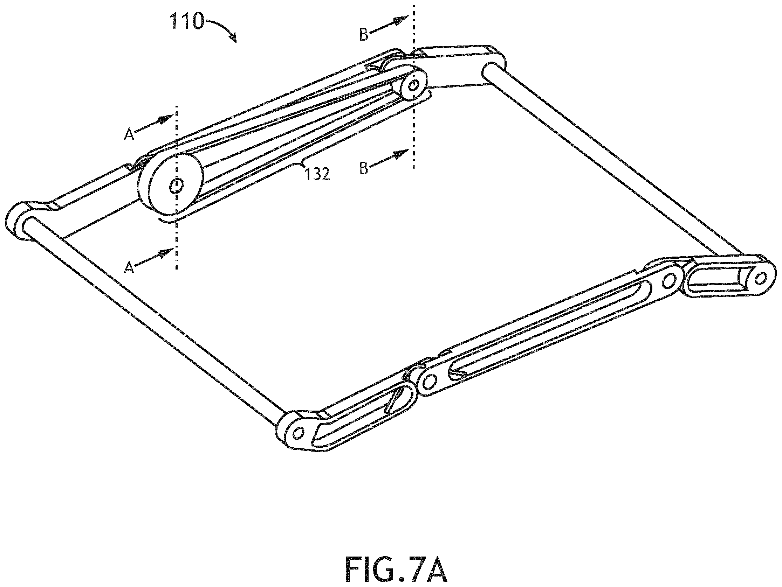

Referring now to FIGS. 7A-7C, various views of an exemplary embodiment of driver train 132 of the seat pan assembly 110 are depicted according to the inventive concepts.

FIG. 7A shows the seat pan assembly 110 including the driver train 132.

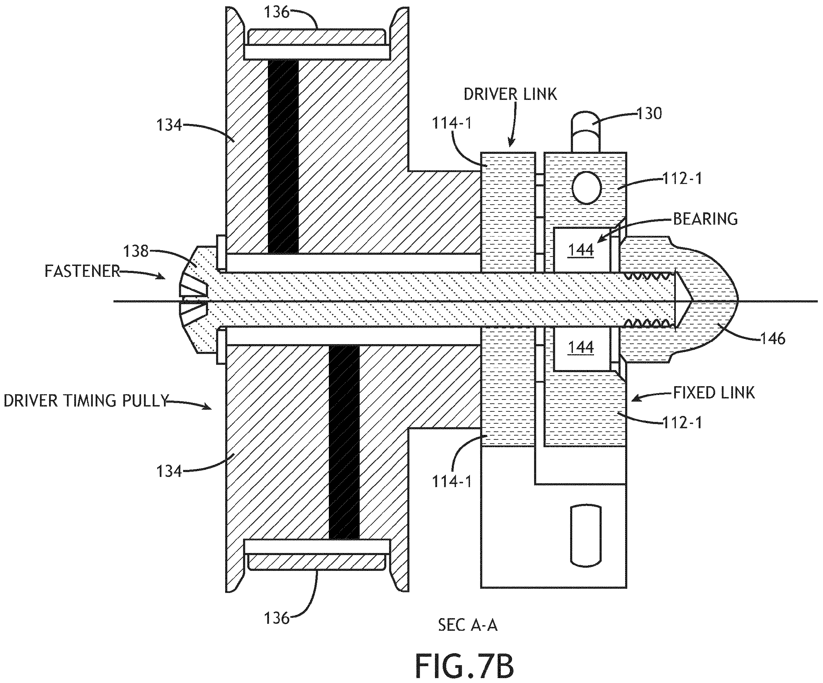

FIG. 7B shows a cross-sectional view of a portion of the driver train 132. For example, the first fastener 138 may extend through the driver timing pulley 134, the aft driver link 114-1, the fixed link 112, a first bearing 144, and a nut 146.

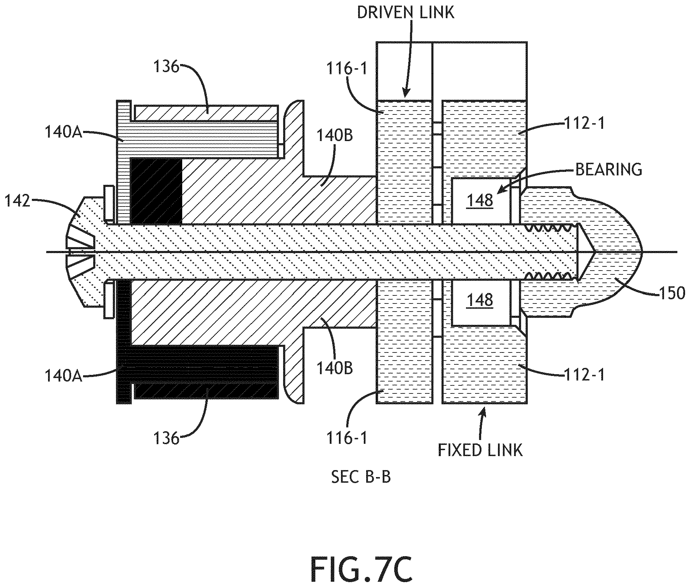

FIG. 7C shows a cross-sectional view of a portion of the driver train 132. For example, the second fastener 142 may extend through the driven pulley 140 (e.g., 140A and 140B or 140A-1 and 140B-1), the fore driven link 116-1, the fixed link 112-1, a second bearing 148, and a second nut 150.

In some embodiments, the driver train 132 and the fixed link 112-1 (as well as the second fixed link 112-2) may be replaced with an annular gear system (e.g., as shown in FIG. 8D) such that an initial amount (e.g., an initial 5-8 degrees) of motion by the aft driver link 114-1 produces no motion in the fore driven link 116-1.

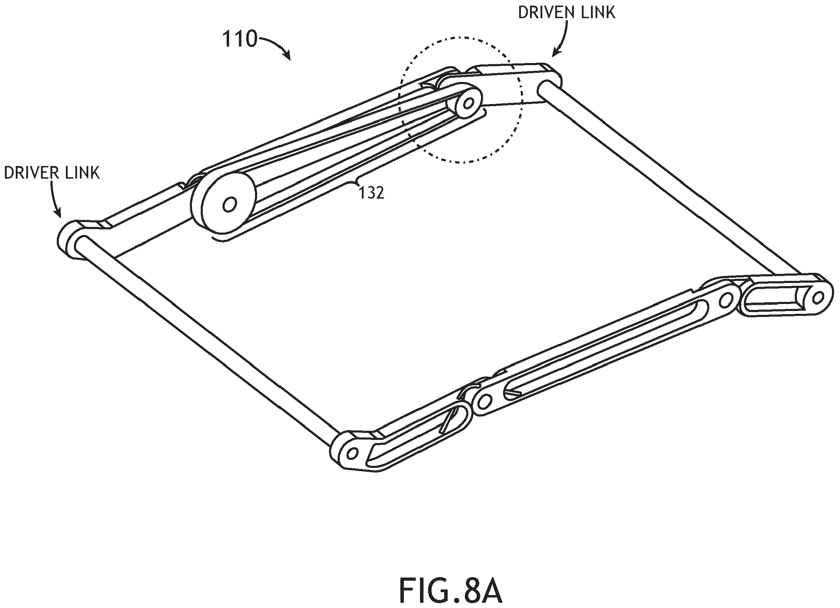

Referring now to FIGS. 8A-8D, various views of an exemplary embodiment of the driver train 132 of the seat pan assembly 110 are depicted according to the inventive concepts.

FIG. 8A shows a perspective view of the driver train 132 of the seat pan assembly 110.

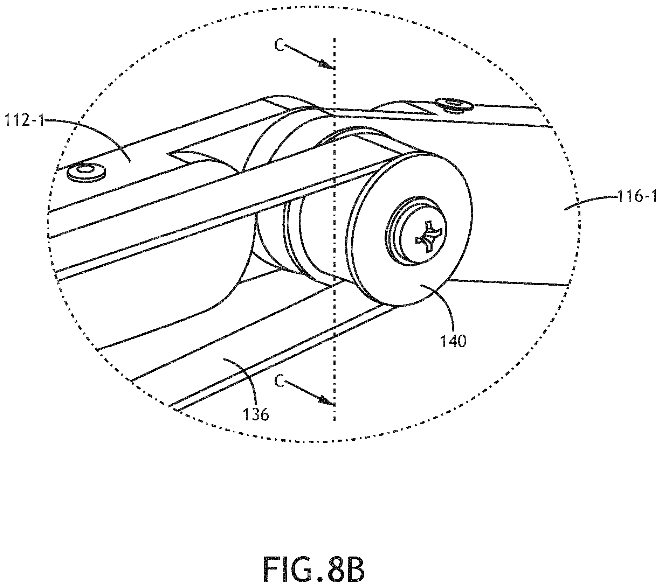

FIG. 8B shows a perspective view of the driven pulley 140 (e.g., 140A and 140B or 140A-1 and 140B-1) of the driver train 132 of the seat pan assembly 110.

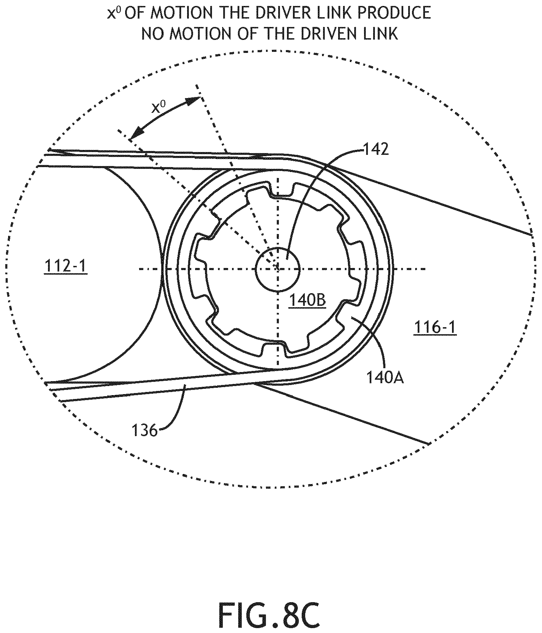

FIG. 8C shows a cut-away view of the driven pulley 140 comprised of the outer staggered gear component 140A and the inner staggered gear component 140B. For example, an initial x degrees (e.g., an initial 5-8 degrees) of motion by the aft driver link 114-1 produces no motion in the fore driven link 116-1 due to the outer staggered gear component 140A moving unimpeded before driving teeth of the inner staggered gear component 140B.

FIG. 8D shows a cut-away view of the driven pulley 140 comprised of an annular gear including an outer annular gear component 140A-1 and an inner annular gear component 140B-1. For example, an initial x degrees (e.g., an initial 5-8 degrees) of motion by the aft driver link 114-1 produces no motion in the fore driven link 116-1 due to the outer annular gear component 140A-1 having at least one more tooth than the the inner annular gear component 140B-1.

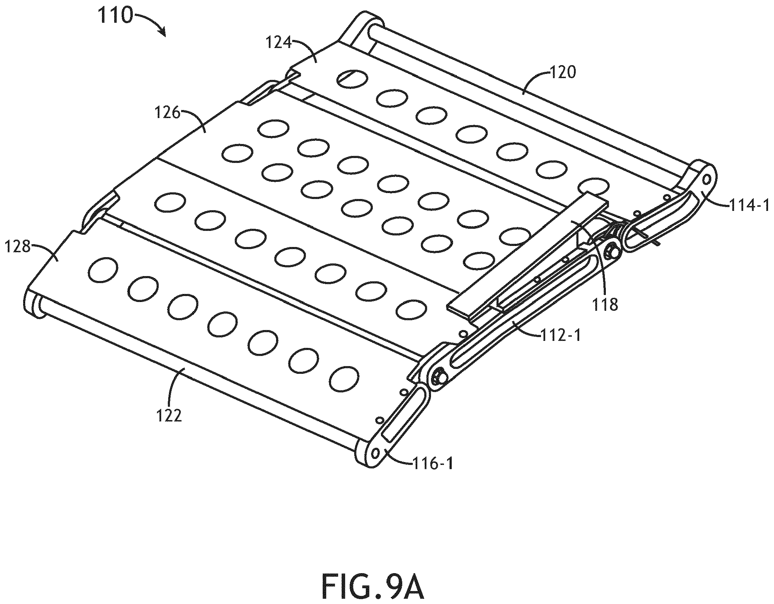

Referring now to FIGS. 9A-9B, perspective views of an exemplary embodiment of the system 100 including the aircraft 102 including the aircraft seat 106 having compact aircraft seat base frames 108 and the seat pan assembly 110 in a deployed state depicted according to the inventive concepts.

The seat pan assembly 110 may include a fixed link 112-1, an aft driver link 114-1, and a fore driven link 116-1. The seat pan assembly 110 may further include a second fixed link 112-2, a second aft driver link 114-2 and a second fore driven link 116-2 (such as shown better in FIG. 6A). The seat pan assembly 110 may include an aft crossbar 120 connected between the second aft driver link aft end and the aft driver link aft end. The seat pan assembly 110 may include a fore crossbar 122 connected between the second fore driven link fore end and the fore driven link fore end.

The seat pan assembly 110 may further include a fore seat pan section 128 connected between the second fore driven link 116-2 and the fore driven link 116-1. The seat pan assembly 110 may include a seat pan section 126 connected between the second fixed link 112-2 and the fixed link 112-1. The seat pan assembly 110 may include an aft seat pan section 124 connected between the second aft driver link 114-2 and the aft driver link 114-1. For example, each of the fore seat pan section 128, the seat pan section 126, and the aft seat pan section 124 may be metal flex plan sections, which may provide sufficient support to a seated occupant and aid in the transfer of force needed to move seat pan assembly 110 from a deployed state to a stowed state, or vice versa. For example, each of the fore seat pan section 128, the seat pan section 126, and the aft seat pan section 124 may be riveted onto one of the links on each side so as to make the seat pan sections integral with each section of the seat pan assembly 110.

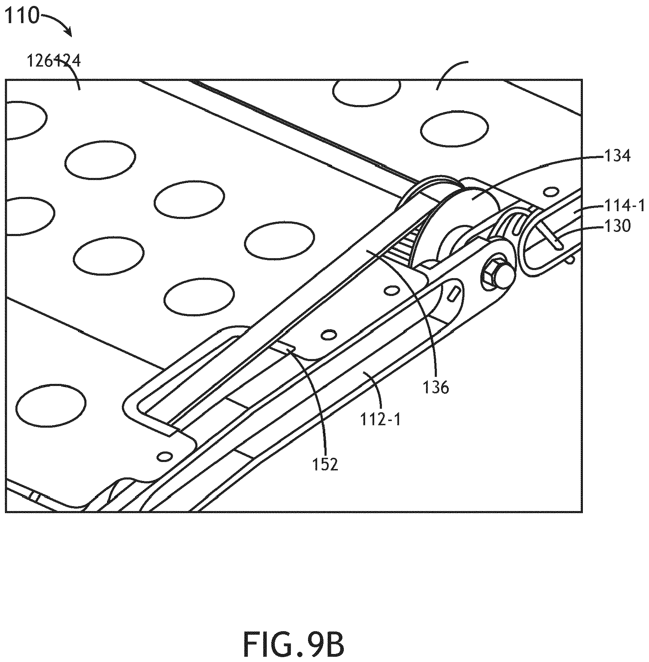

As shown in FIG. 9B, the seat pan section 126 may have a slot (e.g., between a grommet 152 and the fixed link 112-1) to accommodate a portion of the timing belt 136 passing from a top of the driver timing pulley 134 to below the seat pan section 126 to the driven pulley 140. The slot may have the grommet 152 around edges of the slot to protect the timing belt 136 from the edges of the slot.

As shown in FIG. 9A, a shroud 118 may be attached to the fixed link 112-1 and may extend from the fixed link 112-1 to above the driver timing pulley 134 and above the timing belt 136.

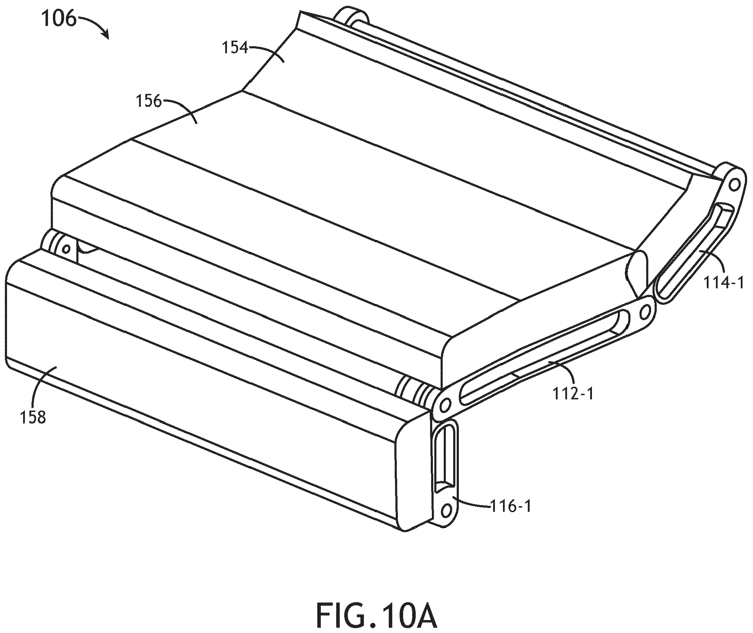

Referring now to FIGS. 10A-10B, perspective views of an exemplary embodiment of the system 100 including the aircraft 102 including the aircraft seat 106 having compact aircraft seat base frames 108 and the seat pan assembly 110 in a stowed state and a deployed state are depicted according to the inventive concepts.

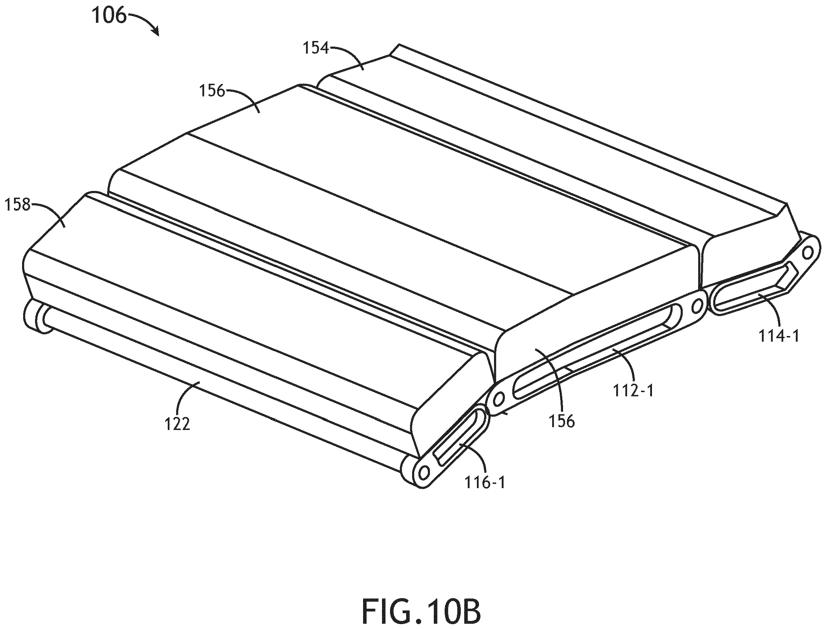

As shown in FIGS. 10A and 10B, the aircraft seat 106 may include a fore foam seat section 158 installed above the fore seat pan section 128, a foam seat section 156 installed above the seat pan section 126, and an aft foam seat section 154 installed above the aft seat pan section 124. The fore foam seat section 158, the foam seat section 156, and the aft foam seat section 154 may be shaped such that the fore foam seat section 158, the foam seat section 156, and the aft foam seat section 154 do not impede motion of the aft driver link 114-1 and the fore driven link 116-1.

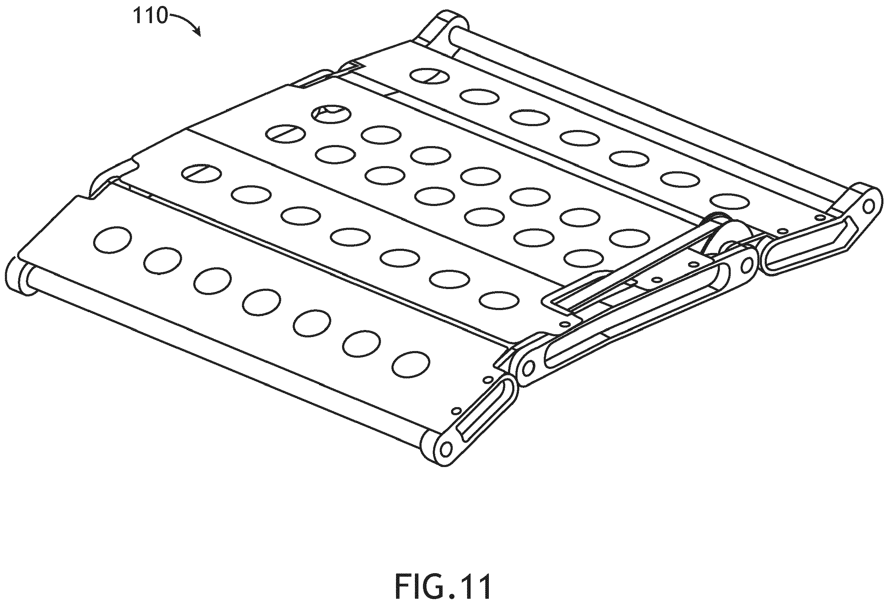

Referring now to FIG. 11, a perspective views of an exemplary embodiment of the seat pan assembly 110 in a deployed state is depicted according to the inventive concepts.

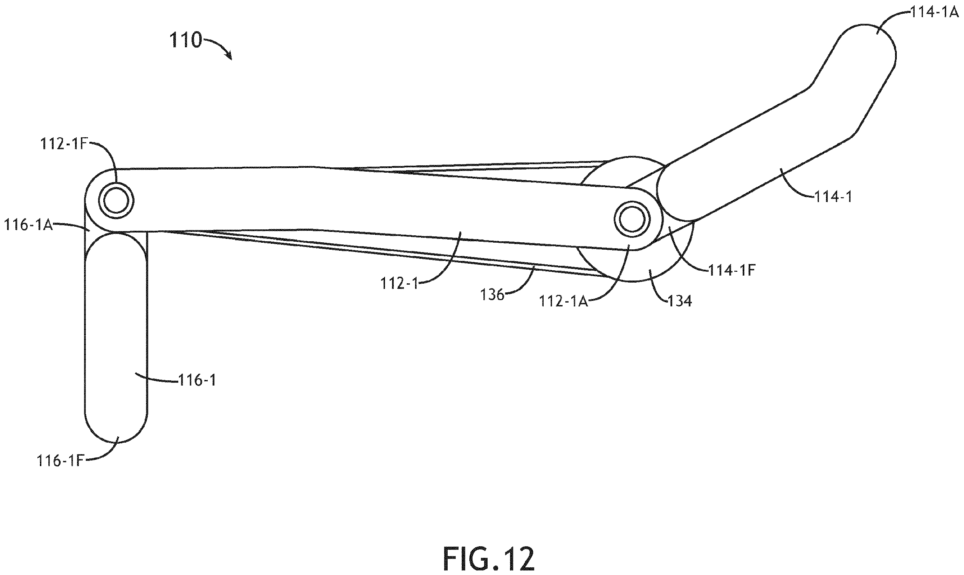

Referring now to FIG. 12, a side view of an exemplary embodiment of the seat pan assembly 110 and the driver train 132 in a stowed state is depicted according to the inventive concepts.

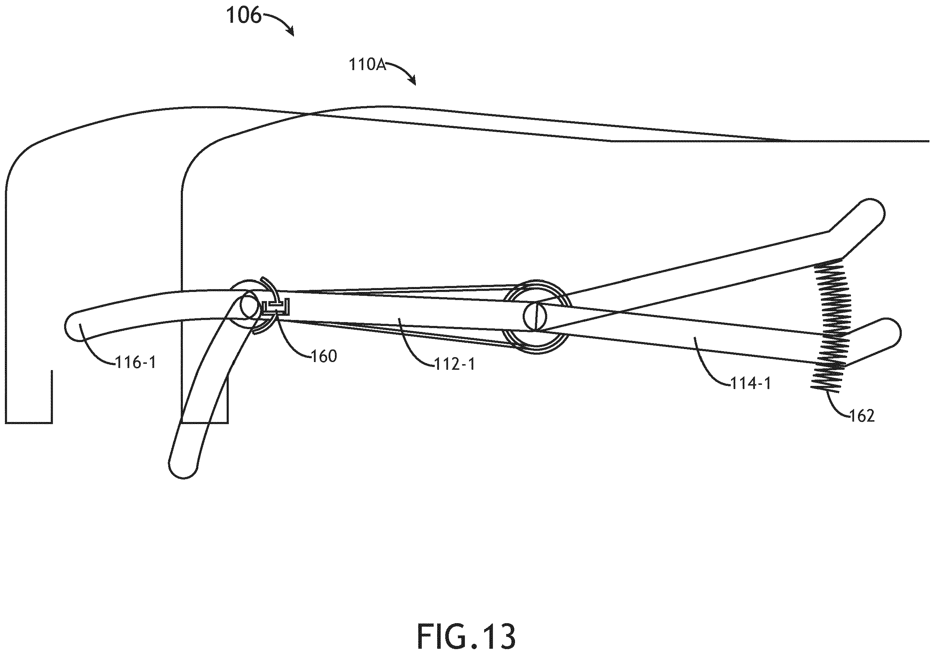

Referring now to FIG. 13, a side view of an exemplary embodiment of a seat pan assembly 110A and the driver train 132 is depicted according to the inventive concepts. The seat pan assembly 110A may function similarly to and have components similar to the seat pan assembly 110, except that the seat pan assembly 110A may have a spring 162 positioned under the aft driver link 114-1 and/or except that that the seat pan assembly 110A may have a damper 160. The spring 162 may be configured to apply upward force on the aft driver link 114-1 such that a default position (when no passenger occupies the seat 106) is the stowed state. The damper 160 may be configured to prevent the fore driven link 116-1 from over-rotating past a desired amount of rotation when moving into the stowed position and/or when moving into the deployed state.

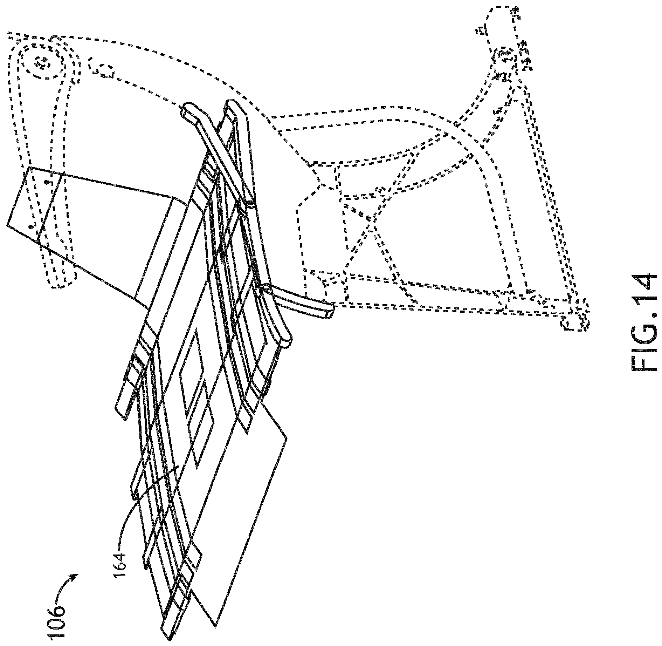

Referring now to FIG. 14, a perspective view of an exemplary embodiment of a seat 106 of a seat pan assembly 110 having a flex pan 164 (e.g., which may be composed of nylon) is depicted according to the inventive concepts. For example, the flex pan 164 may be composed of nylon fabric and intersecting nylon straps.

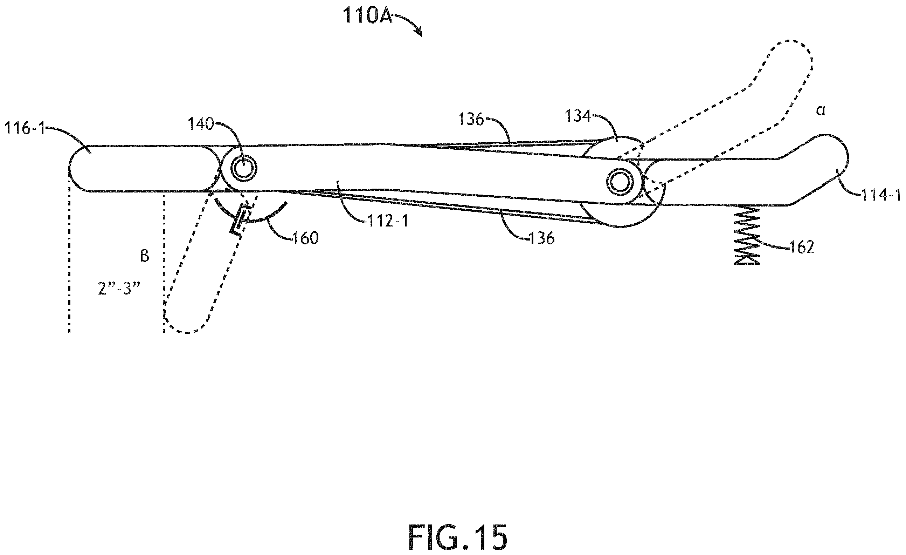

Referring now to FIG. 15, a side view of an exemplary embodiment of the seat pan assembly 110A and the driver train 132 of FIG. 13 is depicted according to the inventive concepts. In some embodiments, the damper 160 may allow for a one-way damping motion such that when sitting, the fore driven link 116-1 is more quickly returned to its occupied position and deployed state. In some embodiments, the angle alpha may be approximately 1/2 of the angle beta; though any suitable ratios of angles may be used.

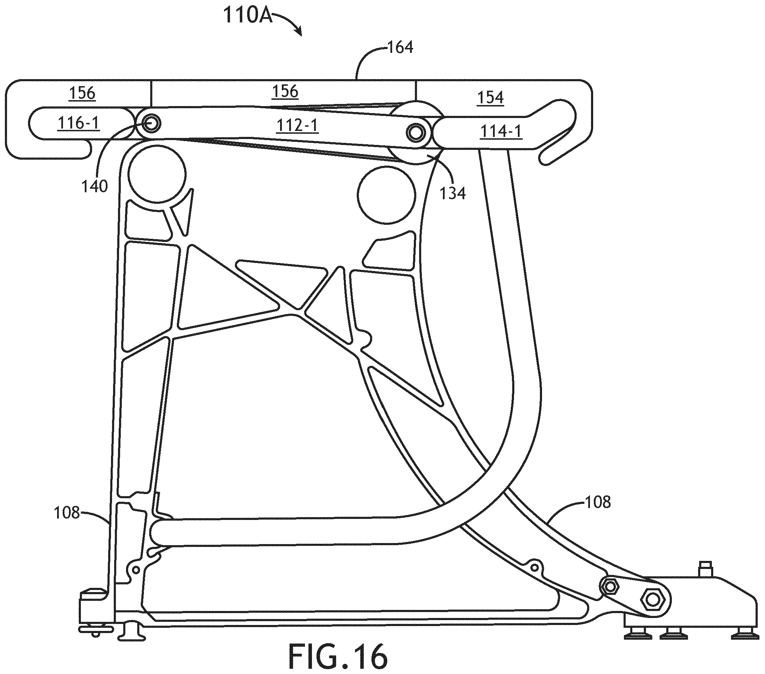

Referring now to FIG. 16, a side view of an exemplary embodiment of the aircraft seat 106 having the compact aircraft seat base frame 108 and the seat pan assembly 110 in a deployed state is depicted according to the inventive concepts. As shown, the aircraft seat 106 may include a fore foam seat section 158 installed above the fore seat pan section 128, a foam seat section 156 installed above the seat pan section 126, and an aft foam seat section 154 installed above the aft seat pan section 124. A seat cover 164 may cover the fore foam seat section 158, the foam seat section 156, and the aft foam seat section 154.

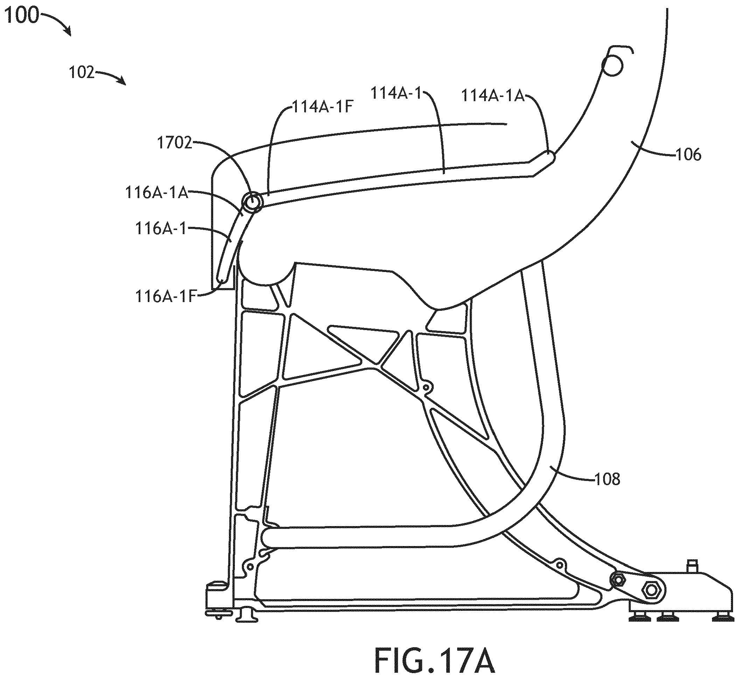

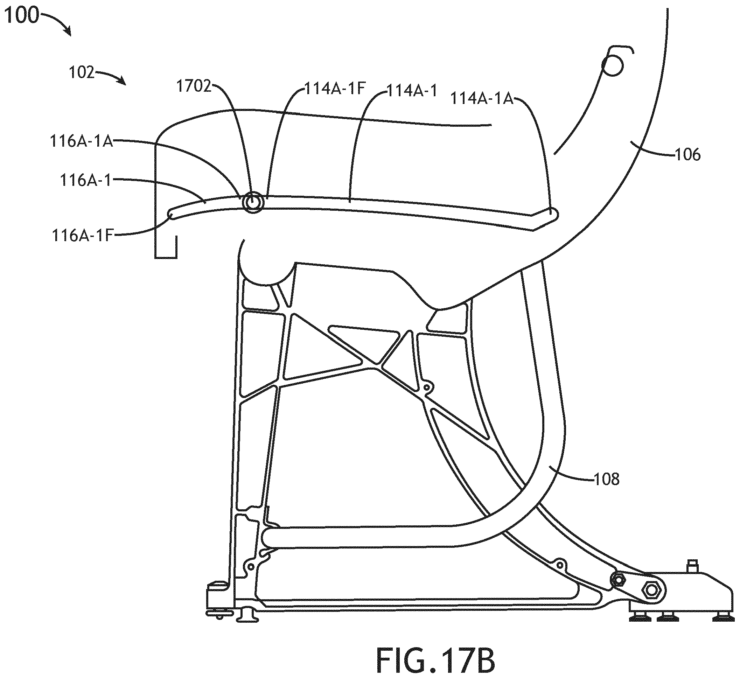

Referring now to FIGS. 17A-17B, side views of an exemplary embodiment of the system 100 including the aircraft 102 including the aircraft seat 106 having compact aircraft seat base frame 108 and the seat pan assembly in a stowed state (as shown in FIG. 17A) and a deployed state (as shown in FIG. 17B) are depicted according to the inventive concepts.

The seat pan assembly may include an aft driver link 114A-1 having an aft driver link fore end 114A-1F and an aft driver link aft end 114A-1A. In some embodiments, the aft driver link aft end 114A-1A may be angled upward as compared to the rest of the aft driver link 114A-1. The seat pan assembly may include a fore driven link 116A-1 having a fore driven link fore end 116A-1F and a fore driven link aft end 116A-1A, and the fore driven link aft end 116A-1A may be pivotably coupled to the aft driver link fore end 114A-1F.

When a downward component force acts upon the aft driver link 114A-1, the aft driver link aft end 114A-1A may be configured to rotate about the fore driven link aft end 116A-1A and cause the fore driven link fore end 116A-1F to rotate about the aft driver link fore end 114A-1F such that the fore driven link fore end 116A-1F is configured to move at least partially in an upward direction and forward direction, such as to a deployed seat pan state.

When the downward component force ceases acting upon the aft driver link 114-1, the aft driver link aft end 114A-1A may be configured to rotate about the fore driven link aft end 116A-1A and cause the fore driven link fore end 116A-1F to rotate about the aft driver link fore end 114A-1F such that the fore driven link fore end 116A-1F is configured to move at least partially in a downward direction and aft direction, such as to a stowed state.

In some embodiments, the seat pan assembly may further comprise a gear 1702 having an outer gear component (e.g., which may be configured similarly to outer staggered gear component 140A or outer annular gear component 140A-1) and an inner gear component (e.g., which may be configured similarly to inner staggered gear component 140B or inner annular gear component 140B-1). The fore driven link aft end 116A-1A may have or be coupled to the inner gear component. The aft driver link fore end 114A-1F may have or be coupled to the outer gear component. For example, the gear 1702 may be one of a staggered gear or an annular gear such that an initial amount of motion by the aft driver link produces no motion in the fore driven link.

The seat pan assembly may further include a second aft driver link (e.g., which may be configured similarly to 114A-1) having a second aft driver link fore end and a second aft driver link aft end. In some embodiments, the second aft driver link aft end may be angled upward as compared to the rest of the aft driver link. The seat pan assembly may include a fore driven link (e.g., which may be configured similarly to 116A-1) having a second fore driven link fore end and a second fore driven link aft end, and the second fore driven link aft end may be pivotably coupled to the second aft driver link fore end. The seat pan assembly may further include a second gear (e.g., which may be configured similarly to the gear 1702).

The seat pan assembly may further include a fore seat pan section 128 connected between the second fore driven link and the fore driven link 116A-1. The seat pan assembly 110 may include an aft seat pan section 124 connected between the second aft driver link and the aft driver link 114A-1. For example, each of the fore seat pan section 128 and the aft seat pan section 124 may be metal flex plan sections, which may provide sufficient support to a seated occupant and aid in the transfer of force needed to move seat pan assembly from a deployed state to a stowed state, or vice versa. For example, each of the fore seat pan section 128and the aft seat pan section 124 may be riveted onto one of the links on each side so as to make the seat pan sections integral with each section of the seat pan assembly.

As will be appreciated from the above, embodiments of the inventive concepts disclosed herein may be directed to a system including a seat pan assembly.

As used throughout, "at least one" means one or a plurality of; for example, "at least one" may comprise one, two, three, ..., one hundred, or more. Similarly, as used throughout, "one or more" means one or a plurality of; for example, "one or more" may comprise one, two, three, ..., one hundred, or more. Further, as used throughout, "zero or more" means zero, one, or a plurality of; for example, "zero or more" may comprise zero, one, two, three, ..., one hundred, or more.

In the present disclosure, the methods, operations, and/or functionality disclosed may be implemented as sets of instructions or software readable by a device. Further, it is understood that the specific order or hierarchy of steps in the methods, operations, and/or functionality disclosed are examples of exemplary approaches. Based upon design preferences, it is understood that the specific order or hierarchy of steps in the methods, operations, and/or functionality can be rearranged while remaining within the scope of the inventive concepts disclosed herein. The accompanying claims may present elements of the various steps in a sample order, and are not necessarily meant to be limited to the specific order or hierarchy presented.

It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that changes may be made which fall within the scope of the invention as defined by the claims.

## Claims

1. A system, comprising: a seat pan assembly (110), comprising:
a fixed link (112-1) having a fore end and an aft end;
an aft driver link (114-1) having an aft driver link fore end and an aft driver link aft end, wherein the aft driver link fore end is pivotably coupled to the aft end of the fixed link; and
a fore driven link (116-1) having a fore driven link fore end and a fore driven link aft end, wherein the fore driven link aft end is pivotably coupled to the fore end of the fixed link;
wherein, when a downward component force acts upon the aft driver link, the aft driver link aft end is configured to rotate about the aft end of the fixed link and cause the fore driven link fore end to rotate about the fore end of the fixed link such that the fore driven link fore end is configured to move at least partially in an upward direction and forward direction.

2. The system of claim 1, further comprising an aircraft seat (106A) comprising the seat pan assembly.

3. The system of claim 2, wherein, when the downward component force ceases acting upon the aft driver link, the aft driver link aft end is configured to rotate about the aft end of the fixed link and cause the fore driven link fore end to rotate about the fore end of the fixed link such that the fore driven link fore end is configured to move at least partially in a downward direction and aft direction.

4. The system of any preceding claim, wherein the seat pan assembly further comprises:
a second fixed link (112-2) having a second fore end and a second aft end;
a second aft driver link (114-2) having a second aft driver link fore end and a second aft driver link aft end, wherein the second aft driver link fore end is pivotably coupled to the second aft end of the second fixed link;
a second fore driven link (116-2) having a second fore driven link fore end and a second fore driven link aft end, wherein the second fore driven link aft end is pivotably coupled to the second fore end of the second fixed link;
an aft crossbar (120) connected between the second aft driver link aft end and the aft driver link aft end; and
a fore crossbar (122) connected between the second fore driven link fore end and the fore driven link fore end;
wherein, when the downward component force acts upon the second aft driver link, the second aft driver link aft end is configured to rotate about the second aft end of the second fixed link and cause the second fore driven link fore end to rotate about the second fore end of the second fixed link such that the second fore driven link fore end is configured to move at least partially in an upward direction and forward direction.

5. The system of any preceding claim, wherein the seat pan assembly further comprises:
a driver train (132) configured to transmit motion from the aft driver link to the fore driven link, and optionally wherein the driver train comprises:
a driver timing pulley (134);
a driven pulley (140); and
a timing belt (136) installed around the driver timing pulley and the driven pulley.

6. The system of claim 5, wherein the driver train further comprises:
a first fastener (138) extending through the driver timing pulley, the aft driver link fore end, and the aft end of the fixed link; and
a second fastener (142) extending through the driven pulley, the fore driven link aft end, and the fore end of the fixed link, and optionally wherein the driver timing pulley has a greater diameter than the driven pulley.

7. The system of claim 6, wherein the driven pulley has one of a staggered gear (140A, 140B) or an annular gear (140A-1, 140B-1) such that an initial amount of motion by the aft driver link produces no motion in the fore driven link, and optionally wherein the driven pulley has the staggered gear such that an initial amount of motion by the aft driver link produces no motion in the fore driven link.

8. The system of any preceding claim, wherein the seat pan assembly further comprises a wire spring (130) coupled between the aft driver link and the fixed link.

9. The system of claim 4 or any claim dependent thereon, wherein the seat pan assembly further comprises:
a fore seat pan section (128) connected between the second fore driven link and the fore driven link;
a seat pan section (126) connected between the second fixed link and the fixed link; and
an aft seat pan section (124) connected between the second aft driver link and the aft driver link.

10. The system of claim 9, wherein the seat pan section has a slot to accommodate a portion of the timing belt passing from a top of the driver timing pulley to below the seat pan section to the driven pulley, and optionally wherein the slot has a grommet (152) around edges of the slot to protect the timing belt from the edges of the slot.

11. The system of claim 5 or any claim dependent thereon, further comprising a shroud (118) attached to the fixed link and extending from the fixed link to above the driver timing pulley and above the timing belt.

12. The system of claim 11, further comprising:
a fore foam seat section (158) installed above the fore seat pan section;
a foam seat section (156) installed above the seat pan section; and
an aft foam seat section (154) installed above the aft seat pan section;
wherein the fore foam seat section, the foam seat section, and the aft foam seat section are shaped such that the fore foam seat section, the foam seat section, and the aft foam seat section do not impede motion of the aft driver link and the fore driven link.

13. A system, comprising:
a seat pan assembly, comprising:
an aft driver link (114-1) having an aft driver link fore end and an aft driver link aft end; and
a fore driven link (116-1) having a fore driven link fore end and a fore driven link aft end, wherein the fore driven link aft end is pivotably coupled to the aft driver link fore end;
wherein, when a downward component force acts upon the aft driver link, the aft driver link aft end is configured to rotate about the fore driven link aft end and cause the fore driven link fore end to rotate about the aft driver link fore end such that the fore driven link fore end is configured to move at least partially in an upward direction and forward direction.

14. The system of claim 13, further comprising an aircraft seat comprising the seat pan assembly, wherein the seat pan assembly further comprises a gear (140A, 140B) having an outer gear component and an inner gear component, wherein the fore driven link aft end has or is coupled to the inner gear component, wherein the aft driver link fore end has or is coupled to the outer gear component.

15. The system of claim 14, wherein the gear is one of a staggered gear or an annular gear such that an initial amount of motion by the aft driver link produces no motion in the fore driven link.
